# EUROPEAN PATENT APPLICATION

(11) **EP 4 372 608 A1**
(43) Date of publication of application: **22.05.2024**
(21) Application number: 22306711.7
(22) Date of filing: 21.11.2022
(51) Int. Cl.: G06K 19/07, G06K 19/077

(54) **LED OR OLED CAPACITANCE ANTENNA FOR CARDS**

(71) Applicant: THALES DIS FRANCE SAS, 92190 Meudon (FR)
(72) Inventor: BUYUKKALENDER, Arek, 13190 ALLAUCH (FR); MERIDIANO, Jean-Luc, 83170 TOURVES (FR); COLOMBARD, Claude, 84120 PERTUIS (FR); MILANINI, Stéphanie, 83210 SOLLIES-PONT (FR)
(74) Representative: Castelo, Jérôme

(57) **Abstract**

A data carrier (1) for a secure article (100) comprises at least one electronic module (2), at least one first antenna (3), at least one second antenna (4), and at least one light emitting device (5). The first antenna (3) is coupled to the electronic module (2). The first antenna (3) is configured to communicate with a remote device being arranged remotely from the data carrier (1). The electronic module (2) is configured to communicate with the remote device via the first antenna (3). The second antenna (4) is configured to communicate with the remote device, and wherein the second antenna (4) powers the light emitting device (5) upon a communication of the second antenna (4) with the remote device.

## Description

### TECHNICAL FIELD

The present invention relates to a data carrier according to claim 1, to a secure article comprising or consisting of such a data carrier according to claim 14, and to a method of producing a data carrier according to claim 15.

### PRIOR ART

Data carriers such as smart cards or electronic tags for passports, as payment cards for payment transactions, etc. are well-known in the art. Such data carriers can provide an identification or an authentication such as a light emission indicating a successful payment transaction to the owner of the data carrier. For this purpose, a light-emitting device such as an LED module can be provided, which emits light when the payment transaction is successful. In order for the light emitting device to emit light, it needs to be powered.

To this end it is known to provide an LED antenna that powers the LED module. Disadvantages associated with such an LED antenna are the high number of turns required on the LED antenna in order to power the LED module, a big energy consumption, and perturbations of other antennas in the data carrier such as the antenna of an electronic module. Furthermore, such an LED antenna is associated with manufacturing costs and the LED lightning is weak.

Other known solutions, where an LED module is turned on without any other energy than the energy from a reader field requires semiconductors that are provided in addition to an antenna, which thus requires additional components and is associated with manufacturing costs as well.

### SUMMARY OF THE INVENTION

It is an object of the present invention to provide a data carrier comprising a light emitting device that is of a simple design and that exhibits lighting capabilities wherein perturbations are minimized.

This object is achieved with a data carrier according to claim 1. That is, a data carrier for a secure article is provided, wherein the data carrier comprises at least one electronic module, at least one first antenna, at least one second antenna, and at least one light emitting device. The first antenna is coupled to the electronic module. The first antenna is configured to communicate with a remote device being arranged remotely from the data carrier. The electronic module is configured to communicate with the remote device via the first antenna. The second antenna is configured to communicate with the remote device, and wherein the second antenna powers the light emitting device upon a communication of the second antenna with the remote device.

The electronic module particularly preferably is a commercially available electronic module. The electronic module preferably comprises an internal microprocessor chip and optionally one or more contact pads. The contact pads may be conventional contact pads such as contact pads being used in contact-type smart cards and being configured to establish an electrical contact with a remoted device being a contact card reader, for instance. Such a smart card is commonly referred to as dual interface smart card. However, it is likewise conceivable that no contact pads are present and that the data carrier is a contactless smart card. That is, the contact pads can be contactless pads and/or contact connection pads.

The first antenna being configured to communicate with the remote device means that the first antenna can establish a communication with the remote device via a physical connection or via a contactless connection. A physical connection is preferably established by means of a wired connection. A contactless connection is preferably established via a field of action of the remote device. Likewise, the second antenna being configured to communicate with the remote device means that the second antenna can establish a communication with the remote device via a physical connection such as a wired connection or via a contactless connection such as via a field of action of the remote device.

Hence, the electronic module can have a function of a contact type and of a non-contact type and can thus be a so-called combi module. However, it can likewise have a function of non-contact type only and be a so-called contactless electronic module.

In the event of the data carrier being a smart card the smart card can thus be a so-called dual interface smart card or a contactless smart card. In addition, various types of such smart cards are conceivable. For instance, the smart card can be a full or combi card, a metal card, a biometrics card, etc.

The first antenna and/or the second antenna preferably correspond to a wire, particularly preferably an electrically conductive wire such as a copper wire.

Since the second antenna powers the light emitting device upon its communication with the remote device, the present invention simplifies the design of the data carrier since no additional electronic elements such as additional resistance or capacitances are required. Moreover, the absence of such additional electronic elements results in an absence of perturbations of the communications established by the data carrier. In particular, any frequency properties of the first antenna and of the second antenna of the data carrier are not modified.

Hence, the communication between the first antenna with the remote device and/or of the second antenna with the remote device preferably is a wireless communication via electromagnetic radiation, in particular via radio waves. As such, the remote device preferably is configured to emit electromagnetic radiation, in particular radio waves. The remote device particularly preferably corresponds to an RF reader as it is known in the field of the art. Consequently, it is preferred that the first antenna and/or the second antenna is in each case a radio-frequency (RF) antenna and/or that the electronic module is an RF module. Said RF module, when being associated to the first antenna, can also be referred to as an RF transponder.

The light emitting device is preferably configured to be powered by the second antenna upon the communication of the electronic module with the remote device via the first antenna. However, the light emitting device can likewise be configured to be powered by the second antenna in the absence of a communication of the electronic module with the remote device.

That is, the light emitting device can be powered on when the second antenna is exposed to a field of action of the remote device whether or not there is a communication established between the electronic module and the remoted device. In particular, the light emitting device is preferably configured to be powered with lower energy than the electronic module.

The second antenna is preferably configured to power the first antenna upon the communication of the second antenna with the remote device.

That is, the second antenna is preferably configured as a booster antenna that enhances or improves the communication between the first antenna and the electronic module with the remote device. In other words, in the event of the first antenna being associated to the electronic module and thus forming a transponder, the second antenna can be seen as a booster antenna for said transponder. Hence, the second antenna can serve a dual function, namely it can power the light emitting device as well as the first antenna.

The second antenna and the first antenna are preferably inductively coupled to one another.

To this end it is conceivable that the second antenna comprises a coupling area, and wherein said inductive coupling between the second antenna, or booster antenna, and the first antenna is preferably established at the coupling area of the second antenna. The coupling area of the second antenna preferably corresponds to a spiral comprising one or more turns that is formed by the second antenna in the form of the wire. Said spiral or coupling area is preferably arranged in view of the first antenna in order to enhance the inductive coupling. However, it should be noted that said coupling area is not needed for the establishment of the inductive coupling and is a purely optional feature.

The second antenna is preferably physically connected to the light emitting device. In other words, the second antenna and the light emitting device are preferably capacitively connected to one another. In particular, the second antenna preferably comprises two end portions, and wherein the second antenna is connected to the light emitting device at the two end portions.

In a first embodiment, the first antenna preferably surrounds the second antenna and preferably additionally also the light emitting device.

In a second embodiment, the second antenna preferably surrounds a transponder being provided by the electronic module being associated to the first antenna.

In any case it is conceivable that the first antenna and the second antenna are arranged within a common plane or in different planes with respect to an extension direction of the data carrier. In other words, when the extension direction is seen as a vertical direction of the data carrier the first antenna and the second antenna can be arranged without or with a vertical offset with respect to one another and when seen along the vertical direction of the data carrier. Again in other words, when seen in cross-section of the data carrier, the first antenna and the second antenna can be located at a same vertical position or at different vertical positions within the data carrier.

The first antenna and the electronic module are preferably arranged within a common plane.

The second antenna and the light emitting device are preferably arranged within a common plane.

A spacing between the second antenna surrounding the first antenna or between the first antenna surrounding the second antenna preferably is at least 50 micrometer and/or 43 millimeter or less and/or particularly preferably about 200 micrometer with respect to a horizontal direction running perpendicularly to the extension direction or the vertical direction, respectively.

The first antenna and/or the second antenna are preferably generated in wire embedded technology as it is well-known in the art.

The first antenna preferably comprises at least one spiral with one or more turns.

The second antenna preferably comprises at least a first spiral with one or more first turns and a second spiral with one or more second turns. Said first spiral and second spiral are preferably interlaced. That is, the second spiral of the second antenna preferably extends between the first turns of the first spiral of the second antenna.

The first turns of the second antenna are preferably wound in a first direction and the second turns of the second antenna are preferably wound in a second direction, and wherein the first direction and the second direction equal one another.

In particular, the first spiral is preferably formed by first turns wound in one plane and in a first direction and furthermore having inter-turn spaces, and wherein the second spiral is wound in a second direction being identical to the first direction and furthermore forms in each case one turn inside a particular inter-turn space.

Alternatively, the first direction of winding the first turns and the second direction of winding the second turns are inverted from one another.

The turns of the first antenna are preferably wound in a direction being different from and particularly preferably opposite to the first direction and the second direction in which the first turns and second turns of the second antenna are wound.

A total number of turns of the second antenna preferably is at least 2 turns and/or 12 turns or less. A spacing between successive turns of the second antenna preferably is 50 micrometer or more and/or 3 millimeter or less.

In particular, a number of first turns of the first spiral preferably equals to or is larger than a number of second turns of the second spiral. A number of first turns of the first spiral preferably is 5 or less, but can likewise be higher if a size of the second antenna. A number of second turns of the second spiral preferably is 5 or less, but can be higher if a size of the second antenna is reduced. A spacing between the first turns of the first spiral preferably is 400 micrometer or less, but can be larger when compensating the number of first turns accordingly. A spacing between the second turns of the second spiral preferably is 400 micrometer or less, but can be larger when compensating the number of second turns accordingly. An intra-spacing between a first turn of the first spiral and a second turn of the second spiral preferably is 200 micrometer or less, but can be larger when compensating the number of turns accordingly.

The first spiral and the second spiral of the second antenna in each case preferably comprises a first end portion and a second end portion. The first end portion of the first spiral is preferably connected to the light emitting device. Additionally or alternatively, the second end portion of the first spiral is preferably connected to the first end portion of the second spiral. Additionally or alternatively, the second end portion of the second spiral is connected to the light emitting device.

The first spiral is associated with a first inductance and the second spiral is associated with a second inductance, and wherein the second inductance is higher than the first inductance. Additionally or alternatively, the first inductance is positive and/or the second inductance is negative.

That is, the first spiral of the second antenna preferably defines two end portions, and wherein the second spiral of the second antenna extends from one of the end portions of the first spiral and furthermore extends along and between the first turns of the first spiral.

The other end portion of the first spiral is preferably connected to the light emitting device as mentioned above. The second spiral preferably extends from the first spiral at one of its end portions, wherein the other of its end portions is preferably connected to the light emitting device.

To this end it is particularly preferred that the first spiral and the second spiral constitute a single-piece component, i.e. form part of a single-piece second antenna. In other words, the end portions of the first and second spirals are not structural or physical end portions such as free ends of separate wires.

The first spiral and the second spiral of the second antenna preferably form mutual inductors.

The first spiral is preferably associated with a first inductance and the second spiral is preferably associated with a second inductance. The second inductance is preferably higher than the first inductance. Additionally or alternatively, the first inductance is preferably positive and/or the second inductance is preferably negative.

That is, the first spiral preferably has a first normal or positive inductance such as 2 µH and the second spiral has a second higher inductance. For instance, the second inductance may be at least ten times greater in absolute value than the first inductance. For example the second inductance could be equal to -38 µH.

As mentioned earlier, the second antenna preferably is a booster antenna, wherein it is furthermore preferred that the booster antenna forms an antenna circuit. Hence, it is particularly preferred that the booster antenna is a radio-frequency antenna circuit comprising at least two spirals interlocking in each other and forming mutual inductors.

The second spiral is preferably equivalent to or confers a capacitance/capacitor value. For instance, if the second spiral is associated with a second inductance of -38 µH, the second spiral confers substantially the equivalent of a capacitance of 33 pF.

In order to at least partially arrange the second spiral between turns of the first spiral and to create capacitance, it is preferred that the booster antenna comprises at least one jump or bridge of at least one turn between the first and second spirals. Said at least one jump is preferably provided each time the second spiral meets an end portion of the first spiral in order to create a concentric design of the booster antenna.

The spiral of the first antenna preferably comprises a first end portion and a second end portion, and wherein the first end portion and the second end portion are connected to the electronic module.

The first antenna is preferably associated with an inductance. The inductance of the first antenna can be lower or higher than the inductance of the second antenna. Furthermore, the inductance of the first antenna can be positive or negative. In addition, a length of the first antenna can be smaller or larger than a length of the second antenna. However, the lengths of the first antenna and the second antenna can also equal one another.

The light emitting device preferably corresponds to a LED module or to an OLED module. The LED module or the OLED (organic LED) module preferably are commercially available modules as they are known in the state or the art. The light emitting device, in particular the LED or OLED module is preferably configured to emit light in the ultraviolet region and/or the visible region and/or the infrared region of the electromagnetic spectrum. Two or more light emitting devices, in particular LED or OLEd modules can be present, wherein said two or more light emitting devices are preferably connected in series to one another. Alternatively, the light emitting devices can also be connected in parallel to one another.

The data carrier preferably further comprises at least one carrier body, and wherein the electronic module and/or the first antenna and/or the second antenna and/or the light emitting device are at least partially and preferably entirely arranged within the carrier body.

The carrier body preferably corresponds to a card body as it is commonly known in the card industry. That is, the carrier body preferably comprises one or more layers that are arranged above one another and which extend along the extension direction. Two or more layers of the carrier body are preferably connected to one another by means of lamination or the like.

Furthermore, the layers preferably comprise or consist of at least one polymer and/or plastic and/or are transparent.

The electronic module and/or the first antenna and/or the second antenna and/or the one or more light emitting devices are preferably at least partially and preferably entirely arranged within the card body.

To this end it is particularly preferred that one or more of these components are provided on a so-called insert or inlay as it is well-known in the card industry. Said inlay or insert is preferably inserted into the carrier body or card body during a hot lamination process thereof. Once laminated, the carrier body or card body is preferably milled on an electronic module area in order to receive the electronic module. If present, the antenna coupling area is preferably located below or under this electronic module area when seen along the extension direction. The inlay or insert preferably comprise or consists of one or more polymers and/or plastics as the carrier body or card body does. Whereas the electronic module is preferably arranged in a milled cavity in the card body, the light emitting device such as the LED or OLED module can be arranged within a cavity provided in the inlay or insert or in the card body. The cavity for the light emitting device can likewise be produced by milling as it is known in the art. To this end the light emitting device(s) is preferably arranged so as to illuminate a top side and/or a bottom side of the data carrier, in particular of the card body.

The data carrier preferably further comprises at least one security element, and wherein the light emitting device is configured and/or arranged in order to illuminate the security element.

The security element preferably is an image and/or an alphanumeric character such as an image or name of the holder of the data carrier. Said security element can be provided in the form of a print, an embossing, debossing, an ablation, etc., as it is known in the field of the art.

The light emitting device is preferably arranged and/or configured such that it illuminates the security element during a communication between the booster antenna and the remote device.

In another aspect, a secure article comprising or consisting of at least one data carrier as described above is provided. The secure article preferably is a smart card, a passport, an electronic tag, a badge, a travel ticket or the like.

Any explanations made herein regarding the data carrier per se likewise apply to the secure article comprising or consisting of the data carrier and vice versa.

The secure article consisting of the data carrier means that the data carrier provides the secure article. For example, the data carrier can be a smart card. However, it is likewise conceivable that the data carrier forms part of a secure article. For instance, the data carrier can be an electronic tag that is embedded in a passport page of a secure article in the form of an e-passport. That is, the data carrier preferably is a form factor, particularly preferably a contactless form factor. To this end it is particularly preferred that the data carrier is an electronic tag compliant with ISO 14443.

In another aspect, a method of producing a data carrier, preferably a data carrier as described above, is provided. The method comprises the steps of i) providing at least one electronic module, ii) providing at least one first antenna, iii) providing at least one second antenna, and iv) providing at least one light emitting device. The first antenna is coupled to the electronic module. The first antenna is configured to communicate with a remote device being arranged remotely from the data carrier. The electronic module is configured to communicate with the remote device via the first antenna. The second antenna is configured to communicate with the remote device, and wherein the second antenna powers the light emitting device upon a communication of the second antenna with the remote device.

Any explanations made herein regarding the data carrier and the secure article comprising or consisting of the data carrier likewise apply to the method of producing the data carrier and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an exploded view of a data carrier comprising a carrier body that has an inlay and an electronic module to be arranged within the carrier body;
- Fig. 2: shows a top view of an inlay comprising first and second antennas, an electronic module and a light emitting device according to a first embodiment to be used in a data carrier according to figure 1;
- Fig. 3: shows a top view of an inlay comprising first and second antennas, an electronic module and a light emitting device according to a second embodiment to be used in a data carrier according to figure 1.

### DESCRIPTION OF PREFERRED EMBODIMENTS

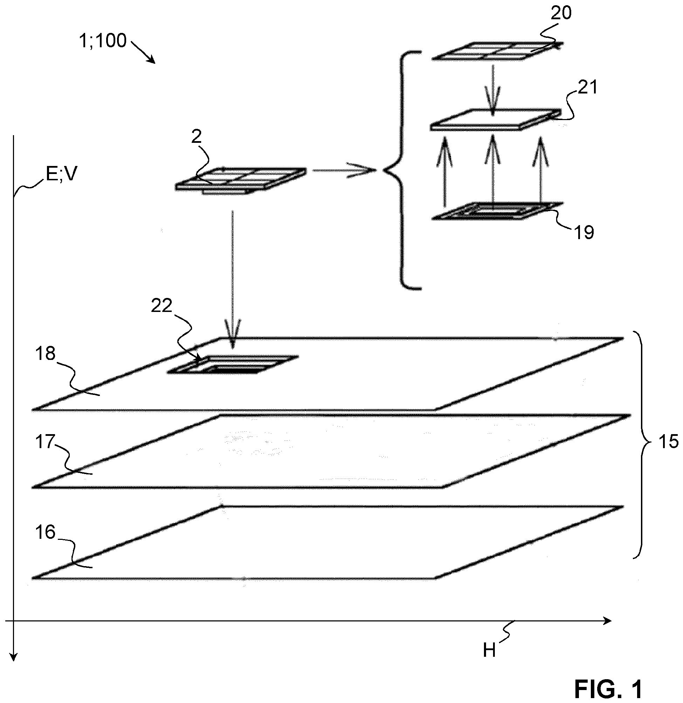

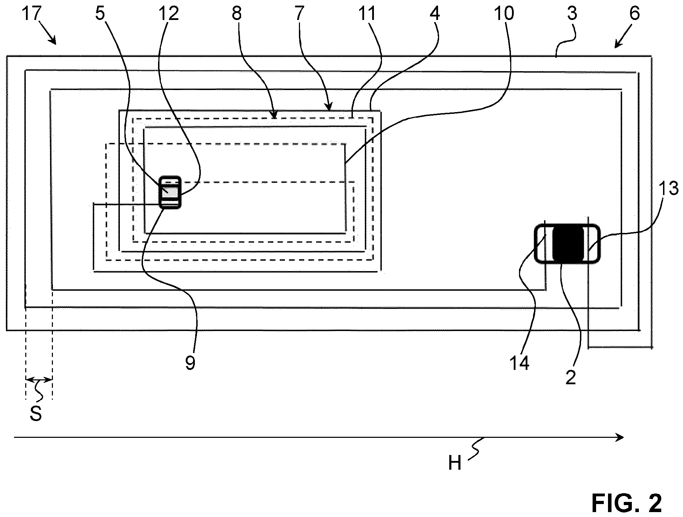

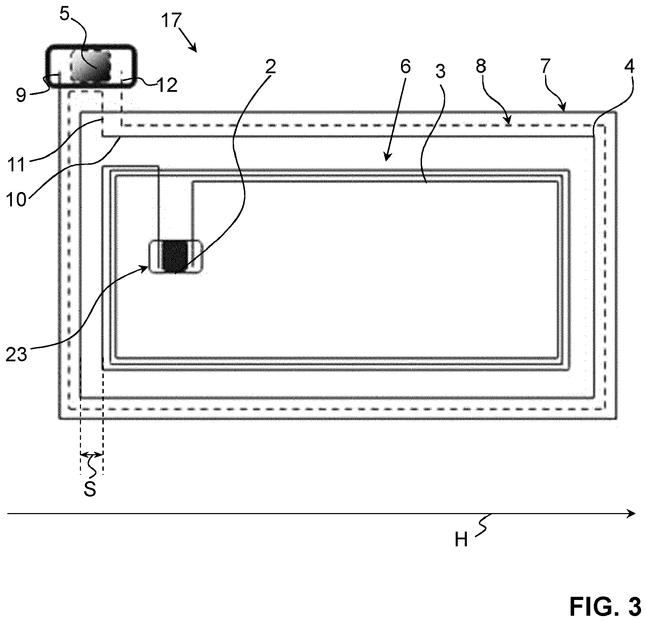

Figure 1 depicts a secure article 100 consisting of a data carrier 1 in the form of a smart card in a schematic manner. In particular, the data carrier 1 comprises a carrier body 15, wherein said carrier body 15 can also be referred to as card body of the smart card. The carrier body 15 comprises here three layers 16, 17,18 that are arranged above one another when seen along an extension direction E or vertical direction V. These layers 16, 17, 18 preferably consist of a transparent plastic. The layer 17 between the upper most layer 18 and the lowermost layer 16 is a so-called inlay. The inlay 17 and the uppermost and lowermost layers 16, 18 of the carrier body 15 are connected to one another via a hot lamination, for instance. Details of the inlay 17 will be discussed with reference to figures 2 and 3 that depict in each case an actual inlay 17 according to the invention and in particular its first and second antennas 3, 4, an electronic module 2 and a light emitting device 5. The inlay 17 of figure 1 is schematic and shall serve the purpose of illustrating a conceivable assembly of a carrier body 15 of a data carrier 1.

As follows from figure 1, the data carrier 1 comprises an electronic module 2 having an internal microprocessor chip 19 and contact pads 20 for contact protocol communication. These components are contained on a module substrate 21. Once laminated, a cavity 22 is milled into the carrier body 15 and the electronic module 2 is placed therein. The electronic module 2, the first and second antennas 3, 4 and the light emitting device 5 of the data carrier 1 according to the invention are thus entirely arranged within the carrier body 15 or card body.

As just mentioned, figures 2 and 3 depict in each case an embodiment of an inlay 17 according to the invention, wherein said inlay 17 comprises the first and second antennas 3, 4 as well as a light emitting device 5. In the depicted examples, the electronic module 2 is provided in the inlay 17 as well. However, it should be noted that the electronic module 2 as well as the first and second antennas 3, 4 or the light emitting device 5 could also be arranged elsewhere in the carrier body 15, for instance in the uppermost layer 18 or lowermost layer 16 of the carrier body 15.

The first antenna 3 is connected to the electronic module 2. The first antenna 3 is configured to communicate with a remote device (not shown) being arranged remotely from the data carrier 1. The electronic module 2 is configured to communicate with the remote device via the first antenna 3. The second antenna 4 is configured to communicate with the remote device, and wherein the second antenna 4 powers the light emitting device 5 upon a communication of the second antenna 4 with the remote device. In the depicted examples the light emitting device 5 corresponds to a LED module or to an OLED module that can emit light in different regions of the electromagnetic spectrum depending on the type of LED or OLED module. The second antenna 4 and the first antenna 3 are inductively coupled to one another. Moreover, the second antenna 4 is physically connected to the light emitting device 5. That is, the present invention is based on the idea of using a capacitive antenna in the form of the second antenna 4 in order to turn on a light emitting device such as an LED module or an OLED module 5.

Figure 2 depicts a first embodiment, wherein the first antenna 3 surrounds the second antenna 4 and also the light emitting device 5. In this embodiment, the second antenna 4 is used as a capacitance antenna that turns on the light emitting device 5 when the second antenna 4 is exposed to a field of action of the remote device. The first antenna 3 is connected to the electronic module 2, and wherein the electronic module 2 preferably comprises a contactless internal microprocessor chip and is a so-called combi electronic module or a contactless electronic module.

Figure 3 depicts a second embodiment, wherein the second antenna 4 surrounds a transponder 23 being provided by the electronic module 2 being associated to the first antenna 3. That is, the second antenna 4 serves as a power supply for the light emitting device 5 with capacitance being integrated to said second antenna 4 that removes the need of using physical capacitance. Said second antenna 4 additionally serves as a booster antenna that powers the first antenna 3 when the second antenna 4 is in communication with the remoted device. The first antenna 3 is connected here to a contactless or dual interface internal microprocessor chip 19 of the electronic module 2.

In both embodiments, the first antenna 3 comprises one spiral 6 with a plurality of turns. The second antenna 4 comprises a first spiral 7 with a plurality of first turns and a second spiral 8 with a plurality of second turns in the embodiment depicted in figure 2 and a first spiral 7 comprising a plurality of first turns and a second spiral 8 comprising one second turn in the embodiment depicted in figure 3 respectively.

In both embodiments, the second spiral 8 of the second antenna 4 extends between the first turns of the first spiral 7 of the second antenna 4 and is interlaced. The first turns of the first spiral 7 of the second antenna 4 are wound in a first direction and the second turns of the second spiral 8 of the second antenna 4 are wound in a second direction, and wherein the first direction and the second direction equal one another.

Moreover, the turns of the first antenna 3 are wound in a direction being opposite to the first direction and the second direction in which the first turns and second turns of the second antenna 4 are wound.

The first spiral 7 and the second spiral 8 of the second antenna 4 in each case comprises a first end portion 9, 11 and a second end portion 10, 12. The first end portion 9 of the first spiral 7 is connected to the light emitting device 5. The second end portion 10 of the first spiral 7 is connected to the first end portion 11 of the second spiral 8. The second end portion 12 of the second spiral 8 is connected to the light emitting device 5.

The spiral of the first antenna 3 comprises a first end portion 13 and a second end portion 14, and wherein the first end portion 13 and the second end portion 14 are connected to the electronic module 2.

In both embodiments, the first antenna, the second antenna, the electronic module and the light emitting device are arranged within a common plane that extends along a horizontal direction H running perpendicularly to the extension direction E or the vertical direction V.

Moreover, in the embodiment depicted in figure 2, a spacing s between an innermost turn of the first antenna and an outermost turn of the second antenna is preferably about 200 micrometer with respect to the horizontal direction H.

In the embodiment depicted in figure 3, a spacing s between an innermost turn of the second antenna and an outermost turn of the first antenna is preferably about 200 micrometer with respect to the horizontal direction H as well.

**LIST OF REFERENCE SIGNS**

| | | | |
|---|---|---|---|
| 1 | data carrier | 15 | carrier body |
| 100 | secure article | 16 | layer |
| 2 | electronic module | 17 | layer |
| 3 | first antenna | 18 | layer |
| 4 | second antenna | 19 | microprocessor chip |
| 5 | light emitting device | 20 | contact pads |
| 6 | spiral | 21 | module substrate |
| 7 | first spiral | 22 | cavity |
| 8 | second spiral | 23 | transponder |
| 9 | first end portion | | |
| 10 | second end portion | E | extension direction |
| 11 | first end portion | V | vertical direction |
| 12 | second end portion | H | horizontal direction |
| 13 | first end portion | s | spacing |
| 14 | second end portion | | |

## Claims

1. A data carrier (1) for a secure article (100) comprising:
- at least one electronic module (2),
- at least one first antenna (3),
- at least one second antenna (4), and
- at least one light emitting device (5),
wherein the first antenna (3) is coupled to the electronic module (2),
wherein the first antenna (3) is configured to communicate with a remote device being arranged remotely from the data carrier (1),
wherein the electronic module (2) is configured to communicate with the remote device via the first antenna (3),
**characterized in that** the second antenna (4) is configured to communicate with the remote device, and wherein the second antenna (4) powers the light emitting device (5) upon a communication of the second antenna (4) with the remote device.

2. The data carrier (1) according to claim 1, wherein the light emitting device (5) is configured to be powered by the second antenna (4) upon the communication of the electronic module (2) with the remote device via the first antenna (3) and/or in the absence of a communication of the electronic module (2) with the remote device.

3. The data carrier (1) according to claim 1 or 2, wherein the second antenna (4) is configured to power the first antenna (3) upon the communication of the second antenna (4) with the remote device.

4. The data carrier (1) according to any one of the preceding claims, wherein the second antenna (4) and the first antenna (3) are inductively coupled to one another, and/or
wherein the second antenna (4) is physically connected to the light emitting device (5).

5. The data carrier (1) according to any one of the preceding claims, wherein the first antenna (3) surrounds the second antenna (4) and preferably additionally also the light emitting device (5), or
wherein the second antenna (4) surrounds a transponder (23) being provided by the electronic module (2) being associated to the first antenna (3).

6. The data carrier (1) according to any one of the preceding claims, wherein the first antenna (3) comprises at least one spiral (6) with one or more turns, and/or
wherein the second antenna (4) comprises at least a first spiral (7) with one or more first turns and a second spiral (8) with one or more second turns.

7. The data carrier (1) according to claim 6, wherein the second spiral (8) of the second antenna (4) extends between the first turns of the first spiral (7) of the second antenna (4), and/or
wherein the first turns of the first spiral (7) of the second antenna (4) are wound in a first direction and the second turns of the second spiral (8) of the second antenna (4) are wound in a second direction, and wherein the first direction and the second direction equal one another.

8. The data carrier (1) according to claim 7, wherein the turns of the first antenna (3) are wound in a direction being different from and preferably opposite to the first direction and the second direction in which the first turns of the first spiral (7) and the second turns of the second spiral (8) of the second antenna (4) are wound.

9. The data carrier (1) according to any one of claims 6 to 8, wherein the first spiral (7) and the second spiral (8) of the second antenna (4) in each case comprises a first end portion (9; 11) and a second end portion (10; 12), and wherein at least one of:
- the first end portion (9) of the first spiral (7) is connected to the light emitting device (5),
- the second end portion (10) of the first spiral (7) is connected to the first end portion (11) of the second spiral (8), and
- the second end portion (12) of the second spiral (8) is connected to the light emitting device (5).

10. The data carrier (1) according to any one of claims 6 to 9, wherein the spiral of the first antenna (3) comprises a first end portion (13) and a second end portion (14), and
wherein the first end portion (13) and the second end portion (14) of the first antenna (3) are connected to the electronic module (2).

11. The data carrier (1) according to any one of the preceding claims, wherein at least one of:
- the light emitting device (5) corresponds to a LED module or to an OLED module,
- the light emitting device (5) is configured to emit light in the ultraviolet region and/or the visible region and/or the infrared region of the electromagnetic spectrum,
- two or more light emitting devices (5) are present, the two or more light emitting devices preferably being connected in series to one another.

12. The data carrier (1) according to any one of the preceding claims, further comprising at least one carrier body (15), and wherein at least one of the electronic module (2), the second antenna (4), the first antenna (3) and the light emitting device (5) are at least partially and preferably entirely arranged within the carrier body (15).

13. The data carrier (1) according to any one of the preceding claims, further comprising at least one security element, and
wherein the light emitting device (5) is configured and/or arranged in order to illuminate the security element.

14. A secure article (100) comprising or consisting of at least one data carrier (1) as claimed in any one of the preceding claims, wherein the secure article (100) is a smart card, a passport, an electronic tag, a badge, a travel ticket or the like.

15. A method of producing a data carrier (1), preferably a data carrier (1) as claimed in any one of the preceding claims, wherein the method comprises the steps of:
- Providing at least one electronic module (2),
- Providing at least one first antenna (3),
- Providing at least one second antenna (4), and
- Providing at least one light emitting device (5),
wherein the first antenna (3) is coupled to the electronic module (2),
wherein the first antenna (3) is configured to communicate with a remote device being arranged remotely from the data carrier (1),
wherein the electronic module (2) is configured to communicate with the remote device via the first antenna (3),
**characterized in that** the second antenna (4) is configured to communicate with the remote device, and wherein the second antenna (4) powers the light emitting device (5) upon a communication of the second antenna (4) with the remote device.
